# EUROPÄISCHE PATENTSCHRIFT

(11) **EP 2 250 370 B1**
(45) Veröffentlichungstag und Bekanntmachung des Hinweises auf die Patenterteilung: **21.05.2014**
(21) Anmeldenummer: 09717519.4
(22) Anmeldetag: 23.02.2009
(51) Int. Cl.: F03D 7/02

(54) **BLATTWINKELVERSTELLRATENGRENZWERTANPASSUNG**
BLADE ANGLE VARIATION RATE THRESHOLD VALUE ADJUSTMENT
ADAPTATION DE VALEUR LIMITE DE VITESSE DE RÉGLAGE D'ANGLE DE CALAGE DE PALE

(30) Priorität: 06.03.2008 DE 102008012956
(43) Veröffentlichungstag der Anmeldung: 17.11.2010
(73) Patentinhaber: Senvion SE, 22297 Hamburg (DE)
(72) Erfinder: WARFEN, Karsten, 23795 Söhren (DE); LEWEKE, Henning, 49090 Osnabrück (DE)
(74) Vertreter: Grebner, Christian Georg Rudolf
(86) Internationale Anmeldenummer: PCT/EP2009/001267
(87) Internationale Veröffentlichungsnummer: WO 2009/109309

(56) Entgegenhaltungen:
- EP-A2- 0 942 168
- WO-A1-2006/007838
- WO-A2-2009/010059
- DE-A1-102006 001 613
- US-A1- 2003 127 862

## Beschreibung

Die Erfindung betrifft ein Verfahren zum Betreiben einer Windenergieanlage mit einem Rotor, der wenigstens ein Rotorblatt aufweist, wobei wenigstens ein Teil des Rotorblatts um eine Längsachse des Rotorblatts um einen Blattwinkel verdreht wird oder ist, wobei die Verdrehung des wenigstens einen Teils des Rotorblatts mit einer vorgebbaren Blattwinkelverstellrate geschieht, wobei der Rotor drehzahlvariabel betrieben wird und wobei die Blattwinkelverstellrate durch einen vorgebbaren Blattwinkelverstellratengrenzwert begrenzt wird. Die Erfindung betrifft ferner eine Windenergieanlage mit einem Rotor, der wenigstens ein Rotorblatt aufnimmt, wobei wenigstens ein Teil des Rotorblatts um eine Längsachse des Rotorblatts um einen Blattwinkel verdrehbar ist, wobei eine Blattwinkelverstellrate vorgebbar ist und die Blattwinkelverstellrate von einem Blattwinkelverstellratengrenzwert begrenzt ist.

Entsprechende Verfahren zum Betreiben einer Windenergieanlage und entsprechende Windenergieanlagen sind an sich bekannt. Hierzu wird beispielsweise auf die DE 10 2006 001 613 B4 der Anmelderin verwiesen.

Bei Verfahren zum Betreiben von Windenergieanlagen und entsprechenden Windenergieanlagen kann das Problem auftreten, dass die Regelung oder Steuerung der Betriebsführung spontan den Blattwinkel des Rotorblatts oder eines Teils des Rotorblatts in Richtung 0° verstellt, wodurch überhöhte Lasten oder Drehzahlen entstehen können. Ein Blattwinkel von 0° entspricht hierbei einer Betriebsstellung des Rotorblatts, bei der eine maximale Leistung aufgrund des Windeinfalls generiert wird. Im Gegensatz dazu ist die Fahnenstellung zu erwähnen, die bei ca. 90° liegt. In der Fahnenstellung wird keine Leistung auf den Rotor mehr übertragen.

In WO 2006/007838 A1 ist ein Verfahren zur Steuerung der Änderungsgeschwindigkeit des Anstellwinkels eines Windturbinenrotorblattes in Richtung Fahnenstellung beim Anhalten eines Rotors beschrieben. Dabei sind zwei unterschiedliche Geschwindigkeitsniveaus für die Änderung des Anstellwinkels vorgesehen, wobei ein erstes, höheres Geschwindigkeitsniveau verwendet wird, um die Bewegung des Rotorblatts anzustoßen. Nach einigen Sekunden schaltet die Steuerung auf das zweite, niedrigere Geschwindigkeitsniveau, um den Anstellwinkel mit konstanter Geschwindigkeit in die Fahnenstellung zu bringen.

Es ist Aufgabe der vorliegenden Erfindung, ein Verfahren zum Betreiben einer Windenergieanlage und eine entsprechende Windenergieanlage als auch eine Steuer- oder Regelvorrichtung einer Windenergieanlage anzugeben, mittels der Belastungen im Betrieb gesenkt werden können, insbesondere mittels der überhöhte Lasten oder Drehzahlen durch eine fehlerhafte Steuerung oder Regelung der Betriebsführung, die den Blattwinkel spontan in Richtung 0° dreht, verhindert werden.

Gelöst wird diese Aufgabe dadurch, dass ein Verfahren zum Betreiben einer Windenergieanlage mit einem Rotor, der wenigstens ein Rotorblatt aufweist, wobei wenigstens ein Teil des Rotorblatts um eine Längsachse des Rotorblatts um einen Blattwinkel verdreht wird oder ist, wobei die Verdrehung des wenigstens einen Teils des Rotorblatts mit einer vorgebbaren Blattwinkelverstellrate geschieht, wobei der Rotor drehzahlvariabel betrieben wird und wobei die Blattwinkelverstellrate durch einen vorgebbaren Blattwinkelverstellratengrenzwert begrenzt wird, das dadurch weitergebildet wird, dass ein variabler Blattwinkelverstellratengrenzwert vorgesehen ist, der in Abhängigkeit wenigstens eines Betriebsparameters der Windenergieanlage, insbesondere in Abhängigkeit von der Rotordrehzahl und/oder wenigstens eines Umgebungsparameters verändert wird.

Durch Vorsehen eines variablen Blattwinkelverstellratengrenzwertes, der in Abhängigkeit wenigstens eines Betriebsparameters der Windenergieanlage und/oder wenigstens eines Umgebungsparameters, wobei es besonders bevorzugt ist, die Abhängigkeit von der Rotordrehzahl vorzusehen, verändert wird, wird im Gegensatz zum Stand der Technik, bei dem der Grenzwert ein fest vorgegebener konstanter Steuerungsparameter der Betriebsführung ist, die Blattwinkelverstellrate (Pitchrate) der Drehzahlzunahme, die durch das Trägheitsmoment und die eingespeiste Leistung bestimmt ist, angepasst. Insbesondere bei einer negativen Pitchrate bleibt diese entsprechend lange gedrosselt, so dass ein massiv die Lebensdauer der Windenergieanlage verringernder Lastfall durch kritische Blattwinkelverstellraten gar nicht mehr auftreten kann.

Im Rahmen der Erfindung sind Betriebsparameter insbesondere Parameter, die mit der Drehzahl in unmittelbarem oder mittelbarem Zusammenhang stehen, wie insbesondere die Drehzahl selbst, die Leistung, das Generatormoment, der Blattwinkel bzw. ein Blattwinkel oder die Belastung der Windenergieanlage. Vorteilhaft zu nennende Umgebungsparameter sind im Rahmen der Erfindung insbesondere die Windgeschwindigkeit, die Windrichtung, ein Windgradient, der Winkel einer Schräganströmung des Rotors, die Luftdichte, eine Turbulenz an der Windenergieanlage und/oder in der Umgebung der Windenergieanlage.

Vorzugsweise beinhaltet das drehzahlvariable Betreiben des Rotors, dass in einer besonders bevorzugten Ausführungsform die Windenergieanlage dauerhaft in einem Drehzahlbereich von mehr als 5 % unterhalb der Synchrondrehzahl des Generators betrieben werden kann.

Im Rahmen der Erfindung bedeutet Synchrondrehzahl der Quotient der Netzfrequenz f und der Polpaarzahl p/2 des Generators. Im Falle eines 4-poligen Generators (also bei zwei Polpaaren) ergibt sich z.B. im deutschen 50 Hz-Netz eine Synchrondrehzahl n_{syn} = f x 60 / (p/2) = 1500 rpm. Im Falle einer Synchronmaschine mit Vollumrichter soll unter Synchrondrehzahl insbesondere die Netzsynchrondrehzahl verstanden werden, in der die Erregung der Maschine mit Netzfrequenz betrieben wird.

Vorzugsweise wird der variable Blattwinkelverstellratengrenzwert in einer Nabenregel- oder -steuerungsvorrichtung in Abhängigkeit von der Rotordrehzahl verändert. Vorzugsweise wird der Betrag der erlaubten Blattwinkelverstellrate bei der Verstellung des Blattwinkels in Richtung 0° reduziert. Eine entsprechende Blattwinkelverstellrate ist dann eine negative Blattwinkelverstellrate, deren Betrag verringert wird.

Vorzugsweise wird der Blattwinkelverstellratengrenzwert vor oder mit seiner Änderung bestimmt. Durch die Bestimmung sind ansonsten möglicherweise undefinierte Blattwinkelverstellratengrenzwerte verhindert.

Vorzugsweise ist ein variabler Blattwinkelverstellratengrenzwert für eine negative Blattwinkelverstellrate vorgesehen.

Es ist bevorzugt, wenn ein erster variabler Blattwinkelverstellratengrenzwert für eine positive Blattwinkelverstellrate und ein zweiter variabler Blattwinkelverstellratengrenzwert für eine negative Blattwinkelverstellrate vorgesehen sind. Hierdurch kann insbesondere die Dynamik der Blattwinkelverstellung an die entsprechenden Gegebenheiten angepasst werden. Insbesondere ist es möglich, dann sehr schnell auf negative Böen zu reagieren.

Vorzugsweise wird das Verfahren in einem drehzahlreduzierten Bereich verwendet und insbesondere vorzugsweise im Teillastbereich. Vorzugsweise sind die Beträge des ersten und des zweiten variablen Blattwinkelverstellratengrenzwertes bei gleicher Rotordrehzahl unterschiedlich.

Vorzugsweise ist bei negativen Blattwinkelverstellraten eine Kennlinie des Blattwinkelverstellratengrenzwertes in Abhängigkeit der Drehzahl vorgesehen, bei der ein höchster Blattwinkelverstellratengrenzwert unterhalb einer unteren vorgebbaren Grenzdrehzahl und ein niedrigster Blattwinkelverstellratengrenzwert oberhalb einer oberen vorgebbaren Grenzdrehzahl vorgesehen ist, wobei zwischen dem höchsten und dem niedrigsten Blattwinkelverstellratengrenzwert eine stetige Kennlinie vorgesehen ist. Hierdurch befindet sich das Betriebsverfahren immer in einem definierten Zustand.

Vorzugsweise ist zwischen dem höchsten und dem niedrigsten Blattwinkelverstellratengrenzwert eine lineare und/oder quadratische Kennlinie vorgesehen oder es liegt ein linearer und/oder quadratischer Anteil in der Kennlinie vor. Hierdurch kann eine Anpassung an die entsprechende Windenergieanlage oder den Standort der Windenergieanlage vorgesehen sein. Die Auswahl der Kennlinie kann in Abhängigkeit von Umweltbedingungen wie Temperatur oder Feuchtigkeit gewählt werden. Beispielsweise kann es zu niedrigeren Drehzahlen hin vorgesehen sein, dass die Kennlinie bei negativen Blattwinkelverstellraten einen Übergang von einem vorgebbaren oberen Blattwinkelverstellratengrenzwert in eine Richtung aufweist, der zu höheren Drehzahlen relativ weich ist. Es wird also mit einer negativen Steigung zu niedrigeren Blattwinkelverstellratengrenzwerten eingeregelt oder eingesteuert.

Vorzugsweise wird eine Drehzahlerfassung in einer Rotornabe der Windenergieanlage vorgenommen. Hierdurch können die Drehzahlen unmittelbar in eine in der Rotornabe oder an der Rotornabe angeordneten Steuer- oder Regelvorrichtung zur Steuerung oder Regelung der Blattwinkelverstellraten geführt werden. Vorzugsweise ist die in der Rotornabe vorgenommene Drehzahlerfassung bzw. an der Rotornabe vorgesehene Drehzahlerfassung zusätzlich zu einer über die Betriebsführung vorgenommenen Drehzahlerfassung. In diesem Fall können die entsprechenden Drehzahlen auch verglichen werden, so dass bei einem vorgebbaren Unterschied der Drehzahl eine Fehlermeldung vorgesehen ist.

Vorzugsweise ist die für die Bestimmung des variablen Blattwinkelverstellratengrenzwertes verwendete Rotordrehzahl gefiltert. Hierzu kann beispielsweise ein Mittelwert über eine vorgebbare Anzahl von Messwerten gebildet werden. Außerdem kann auch ergänzend oder alleine eine zeitliche Filterung beispielsweise über ein an sich bekanntes PT1-Glied vorgenommen werden.

Für die Messung der Drehzahl und die weitergehende Ermittlung der Drehzahl wird insbesondere Bezug genommen auf die Patentanmeldung DE 10 2007 026 995.3 der Anmelderin. Die Offenbarung dieser Patentanmeldung soll vollumfänglich Inhalt der vorliegenden Patentanmeldung sein.

Vorzugsweise liegt der betragsmäßig höchste Blattwinkelverstellratengrenzwert, insbesondere bei negativen Blattwinkelverstellraten der absolut gesehen niedrigste Blattwinkelverstellratengrenzwert, zwischen 3 % bis 15 %, insbesondere 5 % bis 10 %, unterhalb der Nenndrehzahl der Windenergieanlage und zu höheren Drehzahlen vor. Die hohe Drehzahl für die Kennlinie, bei der der Blattwinkelverstellratengrenzwert erreicht ist, liegt damit in einem Bereich von 3 % bis 15 %, insbesondere 5 % bis 10 %, unter der Nenndrehzahl. Hierdurch wird bei nicht gedrosseltem Betrieb mit ausreichend Wind der dynamische Bereich der Regelung der Windenergieanlage mittels der Betriebsführung durch das erfindungsgemäße Verfahren nicht störend beeinflusst.

Vorzugsweise ist eine ergänzende Maßnahme vorgesehen, die den Betrag der Steigung bzw. der Änderungsgeschwindigkeit des Blattwinkelverstellratengrenzwertes begrenzt oder verringert. Hierbei handelt es sich vorzugsweise um eine Art Rampe, die, insbesondere bei schnellen Drehzahländerungen, dafür sorgt, dass der über eine Kennlinie ermittelte Blattwinkelverstellratengrenzwert nicht unmittelbar der angewendete Blattwinkelverstellratengrenzwert ist, sondern ein Wert, der zwischen diesem aus der Kennlinie ermittelten Blattwinkelverstellratengrenzwert und einem vorherigen Blattwinkelverstellratengrenzwert liegt.

Vorzugsweise wird bei einer Drehzahlabweichung von einer Nenndrehzahl, insbesondere einer Unterschreitung der Nenndrehzahl, der Blattwinkelverstellratengrenzwert verändert, ohne eine Reduzierung der Drehzahlabweichung zu bewirken. Hierdurch kann die Windenergieanlage weiterhin in einem gewünschten Betriebsmodus betrieben werden. Vorzugsweise wird bei einer Drehzahlabweichung von einer Nenndrehzahl, insbesondere einer Unterschreitung der Nenndrehzahl, der Blattwinkelverstellratengrenzwert so verändert, dass die zulässige Blattwinkelverstellrate zum Erreichen der Nenndrehzahl eingeschränkt oder begrenzt wird.

Die Aufgabe wird ferner gelöst durch eine Windenergieanlage mit einem Rotor, der wenigstens ein Rotorblatt aufweist, wobei wenigstens ein Teil des Rotorblatts um eine Längsachse des Rotorblatts um einen Blattwinkel verdrehbar ist, wobei eine Blattwinkelverstellrate vorgebbar ist und die Blattwinkelverstellrate von einem Blattwinkelverstellratengrenzwert begrenzt ist, die dadurch weitergebildet ist, dass eine Steuer- oder Regelvorrichtung für die Blattwinkelverstellrate vorgesehen ist, in der der Blattwinkelverstellratengrenzwert als variabler Blattwinkelverstellratengrenzwert vorgesehen ist, der in Abhängigkeit der Rotordrehzahl verändert wird oder ist.

Bei der Steuer- oder Regelvorrichtung kann es sich um eine zur Betriebsführung ergänzende Steuer- oder Regelvorrichtung handeln. Es können auch Teile des erfindungsgemäßen Verfahrens in der Betriebsführung durchgeführt werden und andere Teile in der Steuer- oder Regelvorrichtung. Die Steuer- oder Regelvorrichtung kann auch vollständig in der Betriebsführung integriert sein, wobei es bevorzugt ist, dass zumindest die Drehzahlerfassung in oder an der Nabe geschieht. Vorzugsweise weist die Steuer- oder Regelvorrichtung eine Blattwinkelverstellratengrenzwertbestimmungsvorrichtung auf. Die Blattwinkelverstellratengrenzwertbestimmungsvorrichtung kann auch ein Modul sein, das insbesondere in der Steuer- oder Regelvorrichtung integriert ist. Es kann sich auch um einen in der Steuer- oder Regelvorrichtung vorgesehenen Algorithmus handelt.

Vorzugsweise weist die Blattwinkelverstellratengrenzwertbestimmungsvorrichtung eine Kennlinie des Blattwinkelverstellratengrenzwerts in Abhängigkeit der Drehzahl der Windenergieanlage auf. Die Kennlinie ist vorzugsweise in der Steuer- oder Regelvorrichtung gespeichert oder wird anhand von vorgebbaren Kenngrößen interpoliert. Die Kennlinie kann auch berechnet werden. Beispielsweise kann die Kennlinie teilweise linear sein, einen quadratischen Term und/oder einen kubischen Term aufweisen.

Vorzugsweise ist eine Drehzahlerfassungsvorrichtung vorgesehen, die insbesondere in oder an der Rotornabe angeordnet ist. Ferner vorzugsweise ist ein Filter für eine gemessene Rotordrehzahl vorgesehen. Es ist außerdem vorzugsweise ein Anpassungsmodul für den Blattwinkelverstellratengrenzwert vorgesehen, mittels dessen der Betrag der Steigung der Blattwinkelverstellrate verringerbar ist und/oder mittels dessen der Betrag der Änderungsgeschwindigkeit des Blattwinkelverstellratengrenzwertes verringerbar oder begrenzt ist. Hierbei handelt es sich insbesondere um die vorstehend schon genannte Rampe bzw. das Anpassungsmodul weist diese Rampe auf.

Es ist vorzugsweise eine Steuer- oder Regelvorrichtung einer Windenergieanlage vorgesehen, auf der ein erfindungsgemäßes Verfahren durchführbar ist. Ferner vorzugsweise ist ein Computerprogramm mit Programmcode-Mitteln ausgbildet, die angepasst sind, um das erfindungsgemäße Verfahren auszuführen, wenn das Computerprogramm in einer Steuer- oder Regelvorrichtung einer Windenergieanlage läuft. Vorzugsweise ist das erfindungsgemäße Computerprogramm auf einem von einem Computer lesbaren Datenträger gespeichert.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung von Teilen einer Windenergieanlage,
- Fig. 2: ein schematisches Blockdiagramm zu einem erfindungsgemäßen Verfahren,
- Fig. 3: eine schematische erfindungsgemäße Kennlinie für negative Blattwinkelverstellraten,
- Fig. 4: eine weitere schematische Darstellung von erfindungsgemäßen Kennlinien für negative Blattwinkelverstellraten, und
- Fig. 5: eine schematische Darstellung von drei erfindungsgemäßen Kennlinien für positive Blattwinkelverstellraten.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

Eine negative Blattwinkelverstellrate ist definiert als Rate für eine Blattwinkelverstellung in Richtung aus der Fahnenstellung in die 0° oder Betriebsstellung des Rotorblatts. Entsprechendes gilt für die Blattwinkelverstellratengrenzwerte. Beträgt der negative Blattwinkelverstellratengrenzwert - 3,5°/s bedeutet dies, dass das Rotorblatt mit einer maximalen Verstellgeschwindigkeit von 3,5°/s in Richtung 0° verfahren werden darf, d.h. aus Richtung der Fahnenstellung in Richtung der normalen Betriebsstellung.

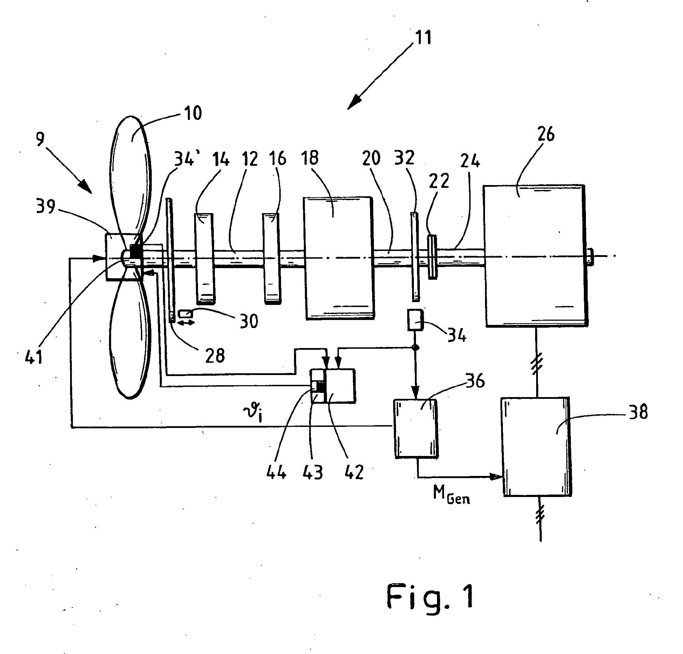

Fig. 1 zeigt schematisch in Form eines Blockbildes wesentliche Teile einer Windenergieanlage 11. Es ist ein Rotor 9 mit Rotorblättern 10 der Windenergieanlage 11 gezeigt, wobei der Rotor 9 sich mit einer Drehzahl n sich dreht. Der Rotor 9 hat eine Welle 12, die in zwei Lagern 14 und 16 gelagert ist. Die Welle 12 ist die Eingangswelle eines nicht weiter beschriebenen Getriebes 18, das die Drehzahl der Welle auf eine höhere Drehzahl übersetzt, beispielsweise um den Faktor 100. Eine Ausgangswelle des Getriebes 18 ist über eine Kupplung 22 mit einer Welle 24 eines Drehstromgenerators 26 gekoppelt. Zwischen dem Windrotor 9 und dem ersten Lager 14 ist eine Arretierscheibe 28 drehfest auf der Welle 12 angeordnet, die mit einem Verriegelungselement 30 zusammenwirkt. Wird das Verriegelungselement 30 z.B. in eine Öffnung oder Ausnehmung der Arretierscheibe 28 eingeführt, ist die Welle 12 damit an einer Drehung gehindert.

Nahe der Kupplung 22 ist eine Geberscheibe 32 drehfest auf dem Wellenabschnitt 20 angeordnet. Sie wirkt mit einer Sensoranordnung 34 zusammen, deren Signale auf einen Rechner 36 gegeben werden. Der Rechner 36 gibt als Regler ein Momenten-Stellsignal auf einen Umrichter 38 für den vom Generator 26 erzeugten Wechselstrom. Der Umrichter 38 erzeugt Wechselstrom mit entsprechenden vorgebbaren Parametern zwecks Einspeisung in ein Netz.

Der Rotor 9 enthält eine Blattwinkelverstellvorrichtung 39 für die Blätter 10 des Rotors 9. Vom Rechner 36 wird mindestens ein Stellsignal ϑ i auf die Blattverstellvorrichtung 39 gegeben. Bei zwei oder mehr Blättern eines Rotors kann je Blatt ein Stellsignal erzeugt werden. Der Regler oder die Steuerung befindet sich beispielsweise am oder im Rechner 36. Das Drehzahl-Istsignal, das über die Sensoranordnung 34 ermittelt wird, wird im Rechner 36 aus den Signalen der Sensoranordnung 34 errechnet und kann beispielsweise mit einem Drehzahl-Sollwertsignal verglichen werden, um mindestens ein Stellsignal ϑ i für die Blattwinkelverstellvorrichtung 39 zu ermitteln.

Erfindungsgemäß kann nun das Drehzahl-Istsignal n bzw. die Rotordrehzahl n auch als Eingang für eine erfindungsgemäße Steueroder Regelvorrichtung 42 dienen, mittels der das erfindungsgemäße Verfahren durchgeführt werden kann. Ein in der Steuer- oder Regelvorrichtung 42 ermittelter Blattwinkelverstellratengrenzwert G oder G' wird dann der Blattwinkelverstellvorrichtung 39 zugeführt. Hierzu ist in Fig. 1 in der Steuer- oder Regelvorrichtung 42 sowohl eine Blattwinkelverstellratengrenzwertbestimmungsvorrichtung 43 als auch ein Anpassungsmodul 44 vorgesehen, die in Bezugnahme auf die folgenden Figuren näher beschrieben werden. Alternativ kann auch alleine oder zusätzlich über die Sensoranordnung 34', die an oder in der Nabe 41 des Rotors 9 angeordnet ist, eine gemessene Rotordrehzahl n der Steuer- oder Regelvorrichtung 42 zugeführt werden. Vorzugsweise sind die Vorrichtungen 42, 43 und/oder 44 in der Blattverstellvorrichtung 39 integriert.

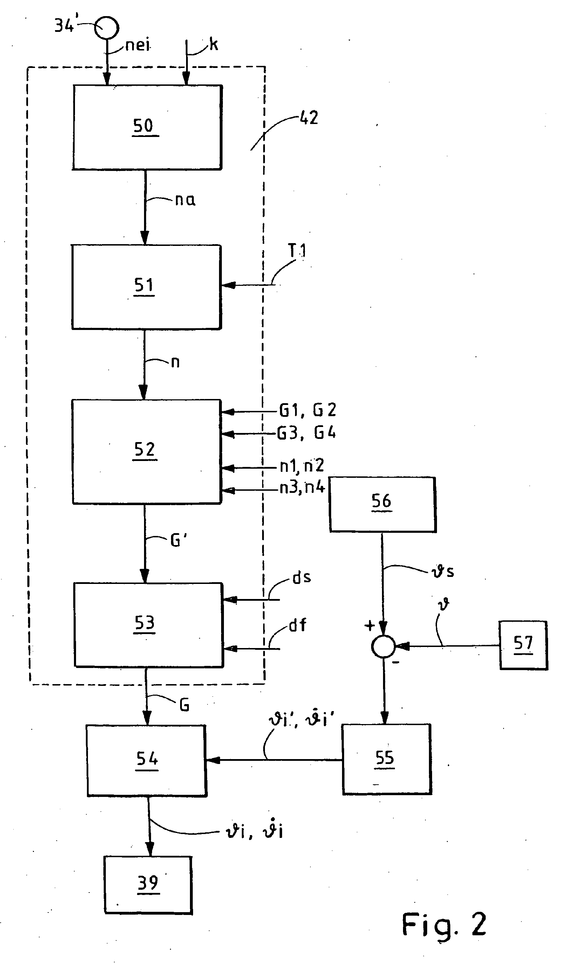

Fig. 2 zeigt ein schematisches Blockdiagramm einer erfindungsgemäßen Verfahrensführung. Von der Sensoranordnung 34', die beispielsweise an der Nabe 41 des Rotors 9 in Fig. 1 angeordnet ist, wird ein Signal erzeugt, das zur Drehzahlberechnung vorgesehen ist. Es ist beispielsweise ein Impulssensor vorgesehen, der beispielsweise die durch 36 Schrauben pro Umdrehung erzeugten Impulse registriert. Hieraus wird über beispielsweise die Konstante k, die einstellbar ist und eine Anzaht (beispielsweise 6) von Messwerten darstellt, die Drehzahl gemittelt. Die Drehzahlberechnung geschieht hierbei aus einem Mittelwert über k Zeitabstände des Impulses ei-1 zum Impuls ei. Dieses geschieht in dem Block 50 mit der Bezeichnung Drehzahlberechnung. Der Ausgang aus der Drehzahlberechnung na stellt eine gemittelte Drehzahl dar, die als Eingang für den Block Drehzahlfilter 51 vorgesehen ist. In dem Drehzahlfilter 51 wird die Drehzahl über beispielsweise ein PT1-Glied gefiltert, beispielsweise mit dem Parameter T1 von 3,0 s. T1 kann vorzugsweise im Bereich zwischen 1 s und 5 s liegen. Die vorher beschriebene Drehzahlermittlung 50 bzw. Drehzahlberechnung 50 kann Teil einer Überdrehzahlabschaltung der Nabe sein und im 1 ms-Zyklus abgefragt werden.

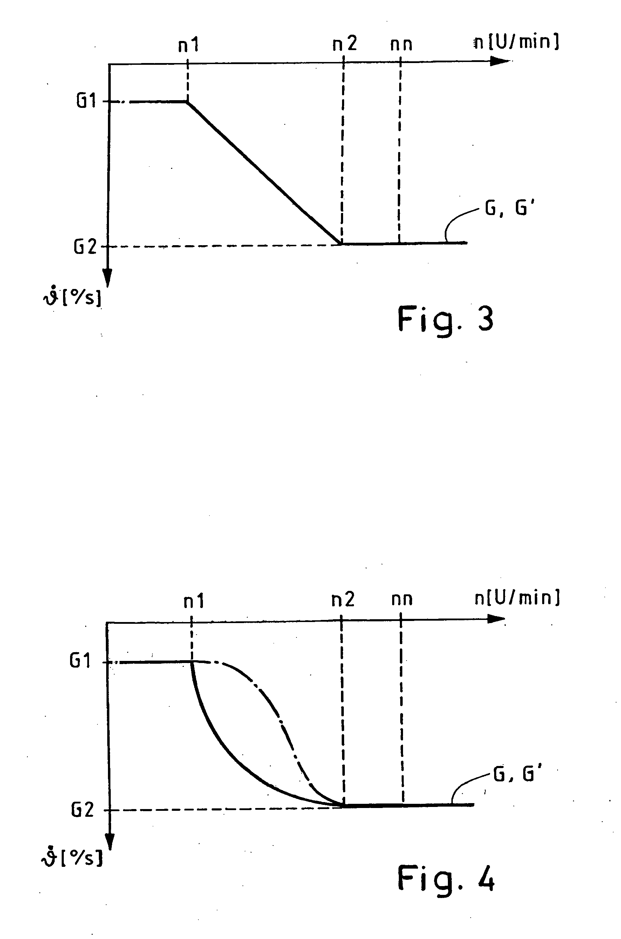

Der Ausgang des Drehzahlfilters 51 stellt die Rotordrehzahl n dar, die als Eingang für die Grenzwertkennlinie 52 dient. In der Grenzwertkennlinie, die im Rahmen der Figuren 3 bis 5 näher beschrieben wird, wird in Abhängigkeit der Drehzahl n ein Blattwinkelverstellratengrenzwert G' für negative Blattwinkelverstellratengrenzwerte und für positive Blattwinkelverstellratengrenzwerte berechnet, je nachdem ob die Blattwinkelverstellrate negativ oder positiv ist. Es können grundsätzlich auch jeweils beide Grenzwerte berechnet oder bestimmt werden.

In dem Block Grenzwertkennlinie 52 bzw. der entsprechenden Vorrichtung können einige Parameter eingegeben bzw. vorgegeben werden bzw. sind entsprechend abgelegt. Hierbei handelt es sich um einen oberen Blattwinkelverstellratengrenzwert G1 für negative Blattwinkelverstellraten ϑ, einen unteren Blattwinkelverstellratengrenzwert G2 für negative Blattwinkelverstellraten ϑ, einen oberen Blattwinkelverstellratengrenzwert G3 für positive Blattwinkelverstellraten ϑ sowie einen unteren Blattwinkelverstellratengrenzwert G4 für positive Blattwinkelverstellraten ϑ. Außerdem können noch die folgenden Parameter vorgegeben werden bzw. in der Grenzwertkennlinie abgelegt sein, nämlich eine untere Grenzdrehzahl n1, n3 und eine obere Grenzdrehzahl n2, n4, wobei n1 und n2 für negative Blattwinkelverstellraten und n3, n4 für positive Blattwinkelverstellraten gilt.

Nach Anwendung der Grenzwertkennlinie 52 wird ein Blattwinkelverstellratengrenzwert G' ausgegeben, der einen Grenzwert für eine minimale Pitchrate bzw. Blattwinkelverstellrate in °/s angibt. In der Blattwinkelverstellratengrenzwertänderungsbegrenzung 53 wird überwacht bzw. sichergestellt, dass sich der Blattwinkelverstellratengrenzwert nicht zu schnell verändert. Dies geschieht durch die Abfrage der bei fallender Rampe zulässigen Grenzwertänderung df sowie der bei steigender Rampe zulässigen Änderung ds. Wesentlich ist hierbei, insbesondere für den sicheren Betrieb der Windenergieanlage, dass sich bei einer fallenden Rampe der Blattwinkelverstellratengrenzwert nur sehr langsam verändern darf, da so auf jeden Fall ausgeschlossen werden kann, dass eine zügige Drehzahlerhöhung bzw. eine schnelle Drehzahlerhöhung, die durch eine fehlerhafte Betriebsführung verursacht wurde, zu einem sicherheitskritischen, nämlich sehr niedrigen, Grenzwert für die Blattverstellrate führen. Eine Änderung in Richtung einer steigenden Rampe muss hingegen zur Gewährleistung der Anlagensicherheit relativ schnell umgesetzt werden. Hierbei werden somit zwei betragsmäßig stark unterschiedliche Parameter eingegeben bzw. sind vorgegeben, nämlich ds, der ein Parameter für eine steigende Rampe darstellt und beispielsweise + 1,000°/s² ist. Dieser Parameter kann vorzugsweise in einem Bereich zwischen 0,1 und 2,000 °/s² liegen. Der weitere Wert df ist ein Parameter für eine fallende Rampe und liegt beispielsweise bei - 0,015°/s² und liegt insbesondere vorzugsweise zwischen - 0,005°/s² und 0,05°/s².

In der Blattwinkelverstellratengrenzwertänderungsbegrenzung 53 wird dann die folgende Abfrage durchgeführt: für G' - G < df wird Gₙₑᵤ = G + df, ansonsten gilt für G' - G > ds:Gₙₑᵤ = G + ds, ansonsten gilt Gₙₑᵤ = G, d.h. G' lag bereits im zulässigen Bereich und wird übernommen. Der ermittelte Wert Gₙₑᵤ wird als neuer Wert G ausgegeben und dann in dem Block Begrenzung der Blattwinkelverstellrate 54 angewendet.

Der Blattwinkelverstellratengrenzwert G wird mit einem von der Blattstellungsregel- oder -steuervorrichtung 55 vorgegebenen Stellsignal ϑi', ϑi' in Beziehung gebracht, so dass als Ausgang des Blocks Begrenzung der Blattwinkelverstellrate 54 eine Begrenzung der Stellsignale ϑi, ϑi durch Anwendung des Blattwinkelverstellratengrenzwertes G der Blattwinkelverstellvorrichtung 39 zur Verfügung gestellt wird. Das Stellsignal ϑi', ϑi' ergibt sich an sich durch die übliche und vorhandene Steuerung oder Regelung, dadurch, dass ein Sollwert ϑ s von der Betriebsführung 56 vorgegeben wird und mit einem von der Blattwinkelbestimmungsvorrichtung 57 ermittelten Istwert des Blattwinkels ϑ verglichen wird und das Ergebnis der Blattstellungsregel- oder -steuervorrichtung 55 zur Verfügung gestellt wird. Diese ermittelt dann ein Stellsignal ϑi' und ϑ̇i', um den Blattwinkelistwert ϑ dem Sollwert ϑs anzupassen, der in den Block Begrenzung der Blattwinkelverstellrate 54 gegeben wird.

Die Drehzahlberechnung 50, der Drehzahlfilter 51, die Grenzwertkennlinie 52 und die Blattwinkelverstellratengrenzwertänderungsbegrenzung 53 kann integraler Bestandteil einer Steuer- oder Regelvorrichtung 42 sein. Es findet dann ein Übergang bzw. eine Einbindung in die vorhandene Regelung am Übergang zwischen der Blattwinkelverstellratengrenzwertänderungsbegrenzung 53 zur Begrenzung der Blattwinkelverstellrate 54 statt.

Der beispielsweise als PT1-Glied ausgebildete Filter in 51 dient der Filterung der Drehzahl n. Es werden hierbei Signalstörungen und ein Teil des dynamischen Drehzahlverhaltens herausgefiltert. Die Filterzeit darf nicht zu groß sein, damit der Kennlinienbaustein bzw. die Anwendung der Grenzwertkennlinie 52 das Verfahren ausreichend schnell auf einen der Drehzahl entsprechenden Blattwinkelverstellratengrenzwert G einstellen kann. Um Fehler zu vermeiden, kann es vorgesehen sein, dass über mehrere, beispielsweise drei Messzyklen ein ungefähr gleicher Drehzahlwert ermittelt werden muss, bevor dieser an den Block 52 weitergegeben wird.

Die Blattwinkelverstellratengrenzwertänderungsbegrenzung 53 bzw. der entsprechende Rampenbaustein lässt die betragsgemäße Reduzierung des Blattwinkelverstellratengrenzwertes, also beispielsweise von - 3,5°/s in Richtung - 1,0°/s schnell zu. Der Rückweg zur Steigerung des Betrags des Blattwinkelverstellratengrenzwertes, also beispielsweise von - 1,5°/s zu - 3,5°/s wird mit einer kleinen Steigung so verzögert, dass bei einem so genannten "Pitch run away-Fall" bei niedrigen Triebstrangdrehzahlen die negative Blattwinkelverstellrate lange genug gedrosselt bleibt. Ein derartiger Störfall des "Pitch run away" kann beispielsweise 20 s in Anspruch nehmen, was bei der vorgesehenen Rampe mit den angegebenen Parametern unproblematisch ist.

Im Block 54 findet zusätzlich zur erfindungsgemäßen Blattwinkelverstellratengrenzbegrenzung mit G' bzw. G noch grundsätzlich eine Begrenzung mit einer fest vorgebbaren maximalen und/oder minimalen Blattwinkelverstellrate von beispielsweise + 6,5°/s und - 6,5°/s statt. Das so begrenzte Stellsignal ϑ i, ϑ̇ i wird dann der Blattverstellvorrichtung 39 vorgegeben. In einer besonders kompakten Ausführung der Erfindung sind die Baugruppen 50 bis 54 in der Blattstellungsregel- oder -steuervorrichtung 55 integriert. In einer noch kompakteren und somit vorteilhaften Ausführungsform ist auch noch die Blattstellungsregel- oder -steuervorrichtung 55 in die Blattwinkelverstellvorrichtung 39 integriert. Beispielsweise kann das Verfahren als Algorithmus in der Software des Umrichters zur Ansteuerung der Blattverstellantriebe implementiert sein bzw. Teile des Verfahrens, wobei die entsprechende Software auch die Erfassung und Verarbeitung der Messwerte des Drehzahlsensors 34' vornimmt.

Der Kennlinienbaustein bzw. die Grenzwertkennlinie 52 ist in den Figuren 3 bis 5 näher dargestellt. Zunächst zu Fig. 3, in der eine Kennlinie des Blattwinkelverstellratengenzwertes in ϑ̇'°/s in Abhängigkeit der Drehzahl n in Umdrehung/min dargestellt ist. Es ist ein oberer Blattwinkelverstellratengrenzwert G1 und ein unterer Blattwinkelverstellratengrenzwert G2 dargestellt. Ein Grenzwert über dem oberen Blattwinkelverstellratengrenzwert G1 und unter dem unteren Blattwinkelverstellratengrenzwert G2 ist nicht vorgesehen, da sie bei funktionierendem Betriebsverfahren nicht auftreten können. Tatsächlich existieren entsprechende Blattwinkelverstellratengrenzwertplateaus in einer Höhe von G1 unterhalb einer unteren Grenzdrehzahl n1 und entsprechend ein Plateau in einer Höhe von G2 oberhalb einer oberen Grenzdrehzahl n2. Die positive Blattwinkelverstellrate kann bei einem vorgegebenen negativen Blattwinkelverstellratengrenzwert ohne Grenzwert ausgebildet sein und umgekehrt.

Die obere Grenzdrehzahl n2 liegt vorzugsweise in einem Bereich zwischen 5 % bis 10 % unter der Nenndrehzahl nn. Die dargestellte Kennlinie für den Blattwinkelverstellratengrenzwert G bzw. G' stellt die gemäß der Erfindung möglichen negativen Blattwinkelverstellratengrenzwerte abhängig von der aktuellen Drehzahl n ein. So wird Fehlern aus der Betriebsführung mit hoher Blattwinkelverstellrate Richtung 0° derart vorgebeugt, dass die Windenergieanlage durch eine reduzierte negative Blattwinkelverstellrate über einen vorhandenen Drehzahlwächter, beispielsweise einen, der auf der Schnellwelle bei 1.950 U/min (bei Nenndrehzahl von 1.800 U/min) ein entsprechendes Überdrehzahlsignal erzeugt, beherrscht werden kann.

Die Bezeichnung G, G' für den aus der gemessenen Drehzahl ermittelten Blattwinkelverstellratengrenzwert deutet an, dass zum einen, wie zu Fig. 2 erläutert, G' angegeben werden kann, wobei auf G' noch das Modul Blattwinkelverstellratengrenzwertänderungsbegrenzung 53 angewendet werden kann, um G zu bilden. Alternativ kann direkt unter Auslassen des Moduls 53 G aus der Kennlinie gewonnen werden und unmittelbar als Grenzwert dienen. Zur Verhinderung des Lastfalls "Pitch run away" ist allerdings die Verwendung des Moduls 53 sehr vorteilhaft.

Die Blattwinkelverstellrate wird der Drehzahlzunahme, die durch das Trägheitsmoment und die eingespeiste Leistung bestimmt wird, entsprechend angepasst. Bei gemessenen Drehzahlen über oder unter den Stützpunktenn n1 und n2, werden die entsprechenden zugehörigen Grenzwerte G1 und G2 ausgegeben. Der lineare Zusammenhang zwischen n1 und n2 stellt einen einfachen Fall dar.

In Fig. 4 wird eine quadratische Funktionalität zwischen n1 und n2 dargestellt (durchgezogene Linie) und außerdem eine Funktion, die ein Polynomglied dritten Grades, beispielsweise mit einer 3er Potenz aufweist. Es kann entsprechend auch eine Taylor-Reihen-Entwicklung vorgesehen sein, die nach dem zweiten oder dritten Glied abgebrochen ist, oder eine Kennlinie in Form eines beliebigen Poligonzugs oder einer sonstigen mathematischen Funktion, die z.B. in Form einer Wertetabelle in einem Speicher abgelegt wird. Der optimale Verlauf einer solchen Kennlinie wird bevorzugt durch dynamische Simulationsrechnungen bestimmt, die im Stand der Technik bekannt sind.

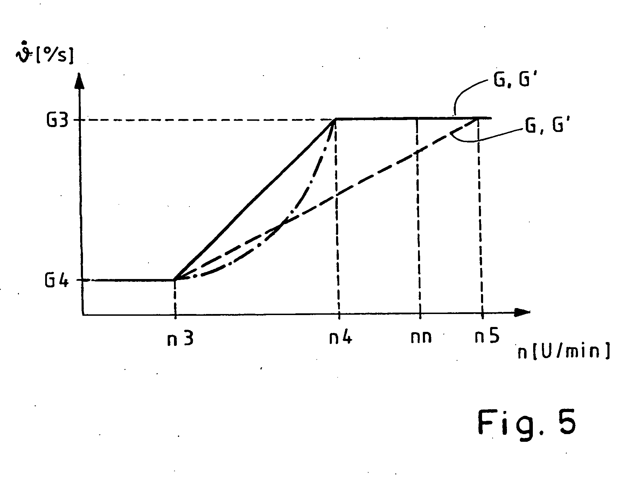

Fig. 5 zeigt hingegen drei verschiedene Kennlinien bei positiven Blattwinkelverstellraten ϑ̇. Es sind vier Grenzdrehzahlen dargestellt, nämlich eine untere Grenzdrehzahl n3, und zwei obere Grenzdrehzahlen n4 und n5, n3 und n4 liegen unterhalb der Nenndrehzahl der Windenergieanlage, wohingegen n5 oberhalb der Nenndrehzahl der Windenergieanlage liegt. Es ist ferner ein unterer Blattwinkelverstellratengrenzwert G4 angegeben und ein oberer Blattwinkelverstellratengrenzwert G3. Zwischen n3 und n4 kann in einer Kennlinie, die als durchgezogene Linie dargestellt ist, ein linearer Zusammenhang sein. Entsprechend stellt die strichpunktierte Linie einen quadratischen Zusammenhang dar bzw. eine Kurve, die zumindest einen quadratischen Anteil aufweist und ggf. auch einen linearen Anteil.

Die strichpunktierte Linie dient als Grenzwertkennlinie beispielsweise dann, wenn bei hohen Windgeschwindigkeiten ein drehzahlreduzierter Betrieb vorgesehen ist, um Geräusche zu minieren. Die gestrichelte Linie sieht vor, den oberen Blattwinkelverstellratengrenzwert erst bei einer Drehzahl n5 oberhalb der Nenndrehzahl nn zu erreichen. Hierdurch wird eine weichere Regelung ermöglicht, die beispielsweise bei Hochdruckwetterlagen angewendet werden kann. Es kann allerdings auch vorgesehen sein, vor Erreichen der Nenndrehzahl nn einen noch höheren Wert als den oberen Blattwinkelverstellratengrenzwert G3 im Anschluss an die obere Grenzdrehzahl n4 vorzusehen, um eine schnellere Regelung zu ermöglichen.

Da erfindungsgemäß eine sehr enge Kopplung zwischen der Drehzahl und dem Blattwinkelverstellratengrenzwert vorgesehen ist, ist eine sichere Verfahrensführung der Windenergieanlage möglich. Hierbei ist eine Bestimmung der Drehzahl im %-Bereich ausreichend, so dass Fehler in der Drehzahlberechnung sich nicht auf die Sicherheit der Verfahrensführung negativ auswirken.

Bei Erreichen der Nenndrehzahl ist vorzugsweise das Vorsehen der Blattwinkelverstellratengrenzwerte nicht für die übliche Betriebsführung begrenzend. Im Teillastbetrieb stört das erfindungsgemäße Verfahren auch nicht, da dort der Blattwinkelverstellregler bzw. die Blattwinkelverstellsteuerung auf 0° eingestellt ist und somit keine Änderung vorzunehmen ist. Das erfindungsgemäße Verfahren greift vorzugsweise nur bei prozessabhängig gewollten Reduzierungen ein, die sich auf die Drehzahl auswirken. Bei modernen Windenergieanlagen geschieht dieses beispielsweise erst bei ca. 40 % Leistungsreduzierung, da erst dort die Nenndrehzahl verlassen wird.

Es ist ferner bevorzugt, eine redundante Ausführung des erfindungsgemäßen Verfahrens vorzusehen, in dem dieses zusätzlich zur Implementierung in der Steuer- oder Regelvorrichtung 42 auch noch im Umrichter zur Ansteuerung der Blattverstellantriebe, also innerhalb der Blattwinkelverstellvorrichtung 39 implementiert wird. Hierdurch ergibt sich ein besonders sicherer Betrieb der Windenergieanlage. Weiterhin kann es von Vorteil sein, das erfindungsgemäße Verfahren zusätzlich in der Betriebsführung 56 zu implementieren, um zu verhindern, dass es zu Fehlermeldungen kommt, wenn die Blattverstellung durch den Blattwinkelverstellratengrenzwert langsamer erfolgt als vom Betriebsführungssystem vorgesehen. Somit würden Betriebsführungssystem 56 und Blattwinkelverstellvorrichtung 39 vorteilhaft synchron arbeiten und sich gegenseitig überwachen können, was einen noch sichereren Betrieb der Anlage ermöglicht. Vorzugsweise findet das erfindungsgemäße Verfahren zur Reduzierung des Blattwinkelverstellratengrenzwertes im 12 msoder ggf. im 6 ms-Zyklus statt. Es können auch andere Zyklen, z.B. zwischen 20 ms und 1 ms, Verwendung finden. Es kann auch vorgesehen sein, dass über drei Task-Zyklen, also über dreimal beispielsweise 12 ms, ein ungefähr gleicher Blattwinkelverstellratengrenzwert ermittelt werden muss, bevor dieser an die Blattwinkelverstellvorrichtung 39 weitergegen wird, um Fehler zu vermeiden. Sollten entsprechend große Abweichungen auftreten, beispielsweise insbesondere bei Abweichungen von Mittelwerten, kann eine Warnung an eine Überwachungszentrale ausgegeben werden.

### Bezugszeichenliste

- 9: Rotor
- 10: Rotorblatt
- 11: Windenergieanlage
- 12: Welle
- 14: Lager
- 16: Lager
- 18: Getriebe
- 20: Ausgangswelle
- 22: Kupplung
- 24: Welle
- 26: Drehstromgenerator
- 28: Arretierscheibe
- 30: Verriegelungselement
- 32: Geberscheibe
- 34, 34': Sensoranordnung
- 36: Rechner
- 38: Umrichter
- 39: Blattwinkelverstellvorrichtung
- 41: Rotornabe
- 42: Steuer- oder Regelvorrichtung
- 43: Blattwinkelverstellratengrenzwertbestimmungsvorrichtung
- 44: Anpassungsmodul
- 50: Drehzahlberechnung
- 51: Drehzahlfilter
- 52: Grenzwertkennlinie
- 53: Blattwinkelverstellratengrenzwertänderungsbegrenzung
- 54: Begrenzung der Blattwinkelverstellrate
- 55: Blattstellungsregel- oder -steuervorrichtung
- 56: Betriebsführung
- 57: Blattwinkelbestimmungsvorrichtung
- nei: i.-tes Eingangssignal für Drehzahl
- n: Rotordrehzahl
- n1, n3: untere Grenzdrehzahl
- n2, n4: obere Grenzdrehzahl
- nn: Nenndrehzahl
- ϑ i, ϑ i': Stellsignal für Blattwinkel
- ϑ̇i, ϑ̇i': Stellsignal für Blattwinkelverstellrate
- ϑ: Blattwinkel
- ϑ̇: Blattwinkelverstellrate
- G, G': Blattwinkelverstellratengrenzwert
- G1: oberer Blattwinkelverstellratengrenzwert für negative Blattwinkelverstellraten
- G2: unterer Blattwinkelverstellratengrenzwert für negative Blattwinkelverstellraten
- G3: oberer Blattwinkelverstellratengrenzwert für positive Blattwinkelverstellrate
- G4: unterer Blattwinkelverstellratengrenzwert für positive Blattwinkelverstellrate
- k: Konstante
- na: gemittelte Drehzahl
- ds: Parameter Steigen der Rampe
- df: Parameter Fallen der Rampe

## Patentansprüche

1. Verfahren zum Betreiben einer Windenergieanlage (11) mit einem Rotor (9), der wenigstens ein Rotorblatt (10) aufweist, wobei wenigstens ein Teil des Rotorblatts (10) um eine Längsachse des Rotorblatts (10) um einen Blattwinkel (ϑ) verdreht wird oder ist, wobei die Verdrehung des wenigstens einen Teils des Rotorblatts (10) mit einer vorgebbaren Blattwinkelverstellrate geschieht, wobei der Rotor (9) drehzahlvariabel betrieben wird und wobei die Blattwinkelverstellrate (ϑ) durch einen vorgebbaren Blattwinkelverstellratengrenzwert (G, G', G1-G4) begrenzt wird, **dadurch gekennzeichnet, dass** ein variabler Blattwinkelverstellratengrenzwert (G, G', G1-G4) vorgesehen ist, der in Abhängigkeit wenigstens eines Betriebsparameters der Windenergieanlage (11), insbesondere in Abhängigkeit von der Rotordrehzahl (n) und/oder wenigstens eines Umgebungsparameters, verändert wird.

2. Verfahren nach Anspruch 1, **dadurch gekennzeichnet, dass** der Blattwinkelverstellratengrenzwert (G, G', G1-G4) vor oder mit seiner Änderung bestimmt wird, wobei insbesondere ein variabler Blattwinkelverstellratengrenzwert (G1, G2) für eine negative Blattwinkelverstellrate (ϑ) vorgesehen ist, wobei insbesondere ein erster variabler Blattwinkelverstellratengrenzwert (G3, G4) für eine positive Blattwinkelverstellrate (ϑ̇) und ein zweiter variabler Blattwinkelverstellratengrenzwert (G1, G2) für eine negative Blattwinkelverstellrate (ϑ̇) vorgesehen sind, wobei insbesondere die Beträge des ersten und des zweiten variablen Blattwinkelverstellratengrenzwertes (G, G', G1-G4) bei gleicher Rotordrehzahl unterschiedlich sind.

3. Verfahren nach Anspruch 1 oder 2, **dadurch gekennzeichnet, dass** bei negativen Blattwinkelverstellraten (ϑ) eine Kennlinie des Blattwinkelverstellratengrenzwertes (G, G', G1-G4) in Abhängigkeit der Drehzahl (n) vorgesehen ist, wobei ein höchster Blattwinkelverstellratengrenzwert (G1) unterhalb einer unteren vorgebbaren Grenzdrehzahl (n1) und ein niedrigster Blattwinkelverstellratengrenzwert (G2) oberhalb einer oberen vorgebbaren Grenzdrehzahl (n2) vorgesehen ist, wobei zwischen dem höchsten und dem niedrigsten Blattwinkelverstellratengrenzwert (G1, G2) eine stetige Kennlinie vorgesehen ist, wobei insbesondere zwischen dem höchsten und dem niedrigsten Blattwinkelverstellratengrenzwert (G1, G2) eine lineare und/oder quadratische Kennlinie vorgesehen ist oder ein linearer und/oder quadratischer Anteil in der Kennlinie vorliegt.

4. Verfahren nach einem der Ansprüche 1 bis 3, **dadurch gekennzeichnet, dass** eine Drehzahlerfassung in einer Rotornabe (41) der Windenergieanlage (11) vorgenommen wird, wobei insbesondere die für die Bestimmung des variablen Blattwinkelverstellratengrenzwertes (G, G', G1-G4) verwendete Rotordrehzahl (n) gefiltert ist.

5. Verfahren nach einem der Ansprüche 1 bis 4, **dadurch gekennzeichnet, dass**, insbesondere bei negativen Blattwinkelverstellraten (ϑ), der vom Betrag her höchste Blattwinkelverstellratengrenzwert (G1, G3) zwischen 3 % bis 15 %, insbesondere 5 % bis 10 %, unterhalb der Nenndrehzahl (nn) der Windenergieanlage (11) und zu höheren Drehzahlen (n) vorliegt.

6. Verfahren nach einem der Ansprüche 1 bis 5, **dadurch gekennzeichnet, dass** eine ergänzende Maßnahme vorgesehen ist, die den Betrag der Änderungsgeschwindigkeit des Blattwinkelverstellratengrenzwerts (G) verringert oder begrenzt, wobei insbesondere bei einer Drehzahlabweichung von einer Nenndrehzahl (nn), insbesondere einer Unterschreitung der Nenndrehzahl (nn), der Blattwinkelverstellratengrenzwert (G, G') verändert wird, ohne eine Reduzierung der Drehzahlabweichung zu bewirken.

7. Verfahren nach einem der Ansprüche 1 bis 6, **dadurch gekennzeichnet, dass** bei einer Drehzahlabweichung von einer Nenndrehzahl (nn), insbesondere einer Unterschreitung der Nenndrehzahl (nn), der Blattwinkelverstellratengrenzwert (G, G') so verändert wird, dass eine zulässige Blattwinkelverstellrate (ϑ) zum Erreichen der Nenndrehzahl (nn) eingeschränkt oder begrenzt wird.

8. Windenergieanlage (11) mit einem Rotor (9), der wenigstens ein Rotorblatt (10) aufweist, wobei wenigstens ein Teil des Rotorblatts (10) um eine Längsachse des Rotorblatts (10) um einen Blattwinkel (ϑ) verdrehbar ist, wobei eine Blattwinkelverstellrate (ϑ) vorgebbar ist und die Blattwinkelverstellrate (ϑ) von einem Blattwinkelverstellratengrenzwert (G, G', G1-G4) begrenzt ist, **dadurch gekennzeichnet, dass** eine Steueroder Regelvorrichtung (42) für die Blattwinkelverstellrate (ϑ) vorgesehen ist, in der der Blattwinkelverstellratengrenzwert (G, G', G1-G4) als variabler Blattwinkelverstellratengrenzwert (G, G', G1-G4) vorgesehen ist, der in Abhängigkeit der Rotordrehzahl (n) verändert wird oder ist.

9. Windenergieanlage nach Anspruch 8, **dadurch gekennzeichnet, dass** die Steuer- oder Regelvorrichtung (42) eine Blattwinkelverstellratengrenzwertbestimmungsvorrichtung (43) aufweist, wobei insbesondere die Blattwinkelverstellratengrenzwertbestimmungsvorrichtung (43) eine Kennlinie des Blattwinkelverstellratengrenzwerts (G, G', G1-G4) in Abhängigkeit der Drehzahl (n) der Windenergieanlage aufweist.

10. Windenergieanlage nach Anspruch 8 oder 9, **dadurch gekennzeichnet, dass** eine Drehzahlerfassungsvorrichtung (34) vorgesehen ist, die insbesondere in oder an der Rotornabe (41) angeordnet ist.

11. Windenergieanlage nach einem der Ansprüche 8 bis 10, **dadurch gekennzeichnet, dass** ein Filter für eine gemessene Rotordrehzahl (n) vorgesehen ist.

12. Windenergieanlage nach einem der Ansprüche 8 bis 11, **dadurch gekennzeichnet, dass** ein Anpassungsmodul (44) für den Blattwinkelverstellratengrenzwert (G, G', G1-G4) vorgesehen ist, mittels dessen der Betrag der Steigung der Blattwinkelverstellrate (ϑ) verringerbar ist und/oder mittels dessen der Betrag der Änderungsgeschwindigkeit des Blattwinkelverstellratengrenzwertes (G) verringerbar oder begrenzt ist.

13. Steuer- oder Regelvorrichtung (42) einer Windenergieanlage (11), auf der ein Verfahren nach einem der Ansprüche 1 bis 7 durchführbar ist.

14. Computerprogramm mit Programmcode-Mitteln, die angepasst sind, um das Verfahren nach einem der Ansprüche 1 bis 7 auszuführen, wenn das Computerprogramm, insbesondere in einer Steuer- oder Regelvorrichtung (42), einer Windenergieanlage (11) läuft.

15. Computerprogramm nach Anspruch 14, das auf einem von einem Computer lesbaren Datenträger gespeichert ist.

## Claims

1. A method of operating a wind turbine installation (11) with a rotor (9), which has at least one rotor blade (10), wherein at least a portion of the rotor blade (10) is rotated about a longitudinal axis of the rotor blade (10) through a blade angle (ϑ̇), wherein the rotation of the at least one portion of the rotor blade (10) occurs with a predeterminable blade angle adjustment rate (ϑ̇), wherein the rotor (9) is operated at a variable speed and wherein the blade angle adjustment rate (ϑ̇) is limited by a predeterminable blade angle adjustment rate limit (G, G', G1-G4), **characterised in that** a variable blade angle adjustment rate limit (G, G', G1-G4) is provided, which is altered in dependence on at least one operational parameter of the wind turbine installation (11), in particular in dependence on the rotor speed (n) and/or at least one environmental parameter.

2. A method as claimed in Claim 1, **characterised in that** the blade angle adjustment rate limit (G, G', G1-G4) is determined before or as it is altered, wherein, in particular, a variable blade angle adjustment rate limit (G1, G2) is provided for a negative blade angle adjustment rate (ϑ), wherein, in particular, a first variable blade angle adjustment rate limit (G3, G4) is provided for a positive blade angle adjustment rate (ϑ) and a second variable blade angle adjustment rate limit (G1, G2) is provided for a negative blade angle adjustment rate (ϑ), wherein, in particular, the values of the first and second variable blade angle adjustment rate limits (G, G', G1-G4) are different at the same rotor speed.

3. A method as claimed in Claim 1 or 2, **characterised in that** a characteristic curve of the blade angle adjustment rate limit (G, G', G1G4) in dependence on the speed (n) at negative blade angle adjustment rates (ϑ) is provided, wherein a highest blade angle adjustment rate limit (G1) is provided below a lower predeterminable threshold speed (n1) and a lowest blade angle adjustment rate limit (G2) is provided above an upper predeterminable threshold speed (n2), wherein between the highest and the lowest blade angle adjustment rate limits (G1, G2) a constant characteristic curve is provided, wherein, in particular, between the highest and the lowest blade angle adjustment rate limits (G1, G2) a linear and/or quadratic characteristic curve is provided or there is a linear and/or quadratic portion in the characteristic curve.

4. A method as claimed in one of Claims 1 to 3, **characterised in that** a speed determination is effected in a rotor hub (41) of the wind turbine installation (11), whereby, in particular, the rotor speed (n) used for the determination of the variable blade angle adjustment rate limit (G, G', G1-G4) is filtered.

5. A method as claimed in one of Claims 1 to 4, **characterised in that**, particularly at negative blade angle adjustment rates (ϑ̇), the highest blade angle adjustment rate limit (G1, G3) as regards its value, between 3% to 15%, particularly 5% to 10%, is present below the rated speed (nn) of the wind turbine installation (11) and to higher speeds (n).

6. A method as claimed in one of Claims 1 to 5, **characterised in that** an additional step is provided which reduces or limits the value of the speed of alteration of the blade angle adjustment rate limit (G), wherein, in particular, when the speed deviates from the rated speed (nn), particularly falls below the rated speed (nn), the blade angle adjustment rate limit (G, G') is altered without effecting a reduction in the speed deviation.

7. A method as claimed in one of Claims 1 to 6, **characterised in that** in the event of a deviation of the speed from a rated speed (nn), particularly when it falls below the rated speed (nn), the blade angle adjustment rate limit (G, G') is so altered that a permissible blade angle adjustment rate (ϑ̇) for reaching the rated speed (nn) is controlled or limited.

8. A wind turbine installation (11) with a rotor (9), which has at least one rotor blade (10), wherein at least a portion of the rotor blade is rotatable about a longitudinal axis of the rotor blade (10) through a blade angle (ϑ), wherein a blade angle adjustment rate (ϑ̇) is predeterminable and the blade angle adjustment rate (ϑ) is limited by a blade angle adjustment rate limit (G, G', G1-G4), **characterised in that** a control or regulating device (42) for the blade angle adjustment rate (ϑ̇) is provided, in which the blade angle adjustment rate limit (G, G', G1-G4) is provided as a variable blade angle adjustment rate limit (G, G', G1-G4), which is altered in dependence on the rotor speed (n).

9. A wind turbine installation as claimed in Claim 8, **characterised in that** the control or regulating device (42) has a blade angle adjustment rate limit determining device (43), wherein, in particular, the blade angle adjustment rate limit determining device (43) has a characteristic curve of the blade angle adjustment rate limit (G, G', G1-G4) in dependence on the speed (n) of the wind turbine installation.

10. A wind turbine installation as claimed in Claim 8 or 9, **characterised in that** a speed detecting device (34) is provided, which is arranged, in particular, in or on the rotor hub (41).

11. A wind turbine installation as claimed in one of Claims 8 to 10, **characterised in that** a filter is provided for a measured rotor speed (n).

12. A wind turbine installation as claimed in one of Claims 8 to 11, **characterised in that** a modification module (44) for the blade angle adjustment rate limit (G, G', G1-G4) is provided, by means of which the value of the increase of the blade angle adjustment rate (ϑ̇) is reducible and/or by means of which the value of the speed of alteration of the blade angle adjustment rate limit (G) is reducible or limited.

13. A control or regulating device (42) of a wind turbine installation (11), on which a method as claimed in one of Claims 1 to 7 may be performed.

14. A computer program with program code means, which are adapted to perform the method as claimed in one of Claims 1 to 7 when the computer program runs, particularly in a control or regulating device (42) of a wind turbine installation (11).

15. A computer program as claimed in Claim 14, which is stored on a data carrier readable by a computer.

## Revendications

1. Procédé de fonctionnement d'une éolienne (11) comprenant un rotor (9) ayant au moins une pale de rotor (10), dans lequel au moins une partie de la pale de rotor (10) est mise en rotation autour d'un axe longitudinal de la pale de rotor (10) selon un angle de la pale (υ), dans lequel la rotation d'au moins une partie de la pale de rotor (10) est effectuée selon un taux de variation de l'angle de la pale pouvant être prédéterminée (υ), le rotor (9) étant actionné à vitesse variable, et dans lequel le taux de variation de l'angle de la pale (υ) est limité par un taux de variation de l'angle de la pale prédéterminable (G, G', G1-G4), **caractérisé en ce qu'**une variable limitant la variation de l'angle de la pale (G, G', G1-G4) est prévue, la variable étant modifiée en fonction d'au moins un paramètre de fonctionnement de l'éolienne (11), en particulier en fonction de la vitesse du rotor (n) et / ou d'au moins un paramètre environnemental.

2. Procédé selon la revendication 1, **caractérisé en ce que** le taux de variation de l'angle de la pale (G, G', G1-G4) est déterminé avant son changement, en particulier un taux variable de variation de l'angle de la pale (G1, G2) est prévu pour un taux de variation négatif de l'angle de pale (υ), en particulier un premier taux variable de variation de l'angle de la pale (G3, G4) pour un taux de variation positif de l'angle de la pale (υ) et un second taux variable de variation de l'angle de la pale (G1, G2) étant prévus pour un taux de variation négatif de l'angle de la pale (υ), en particulier, les amplitudes du premier et du second taux de variation de l'angle de la pale (G, G', G1-G4) étant différentes pour une même vitesse du rotor.

3. Procédé selon la revendication 1 ou 2, **caractérisé en ce que** le taux de variation négatif de l'angle de la pale (υ) est une caractéristique des taux de variation de l'angle de la pale (G, G', G1-G4) en fonction de la vitesse de rotation (n), dans lequel un taux de variation de l'angle de la pale (G1) est prévu lorsque la vitesse passe en dessous d'une vitesse de consigne prédéterminée (n1) et un plus faible taux de variation de l'angle de la pale (G2) est prévu lorsque la vitesse passe au-dessus d'une vitesse supérieure de consigne prédéterminée (n2), une caractéristique constante étant prévue entre le plus haut et le plus bas taux de variation de l'angle de la pale (G1, G2), en particulier entre le plus haut et le plus bas taux de variation de l'angle de la pale (G1, G2), la caractéristique suivant une progression linéaire et / ou quadratique.

4. Procédé selon l'une des revendications 1 à 3, **caractérisé en ce qu'**une mesure de la vitesse de l'éolienne (11) est faite dans un moyeu de rotor (41), en particulier pour déterminer les taux de variation de l'angle de la pale (G, G', G1-G4) selon la vitesse du rotor (n).

5. Procédé selon l'une des revendications 1 à 4, **caractérisé en ce que**, en particulier, pour le taux de variation négatif de l'angle de la pale (υ), l'amplitude la plus élevée du taux de variation de l'angle de la pale (G1, G3) est de 3% à 15%, en particulier de 5% à 10%, inférieure à la vitesse nominale (nn) de l'éolienne (11), l'amplitude la plus élevée étant présente à des vitesses plus élevées (n).

6. Procédé selon l'une des revendications 1 à 5, **caractérisé en ce qu'**une mesure supplémentaire est prévue pour réduire ou limiter le taux de variation du taux de variation de l'angle de la pale (G), en particulier lors d'un écart de vitesse par rapport à une vitesse de consigne de 20 (nn), en particulier lors d'une chute du taux de variation de l'angle de la pale (G, G') au-dessous de la vitesse de consigne (nn), le taux étant changé sans provoquer une réduction de l'écart de vitesse.

7. Procédé selon l'une quelconque des revendications 1 à 6, **caractérisé en ce que** le taux de variation de l'angle de la pale (G, G') est modifié si la vitesse change par rapport à la vitesse de consigne (nn), en particulier lors du passage de la vitesse en dessous de la vitesse de consigne (nn), de manière à ce que le taux de variation (υ) soit limité afin d'atteindre la vitesse nominale (nn).

8. Eolienne (11) comprenant un rotor (9) ayant au moins une pale de rotor (10), au moins une partie de la pale de rotor (10) étant mise en rotation autour d'un axe longitudinal de la pale de rotor (10), le taux de variation de l'angle de la pale (υ) étant prédéterminé, le taux de variation de l'angle de la pale (υ) étant limité par la limite de variation d'angle de la pale (G, G', G1, G4), **caractérisée en ce qu'**un dispositif de commande ou de régulation (42) est prévu pour le taux de variation de l'angle de la pale (υ), **en ce que** le seuil du taux de variation de l'angle de la pale (G, G', G1-G4) et la vitesse du taux de variation de l'angle de la pale (G, G', G1-G4) sont ajustés en fonction de la vitesse du rotor (n).

9. Eolienne selon la revendication 8, **caractérisée en ce que** le dispositif de commande ou de régulation (42) comprend un dispositif (43) de limitation de la variation de l'angle de la pale, le dispositif (43) de limitation de la variation de l'angle de la pale présentant en particulier une courbe caractéristique de la vitesse de variation de l'angle de la pale (G, G', G1-G4) en fonction de la vitesse de rotation (n) de l'éolienne.

10. Eolienne selon la revendication 8 ou la revendication 9, **caractérisée en ce qu'**elle comprend un dispositif de détection de vitesse (34), en particulier disposé dans ou sur le moyeu du rotor (41).

11. Eolienne selon l'une quelconque des revendications 8 à 10, **caractérisée en ce qu'**elle comprend un filtre pour mesurer la vitesse du rotor (n).

12. Eolienne selon l'une quelconque des revendications 8 à 11, **caractérisée en ce qu'**un module de réglage (44) du taux de variation de l'angle de la pale (G, G', G1-G4) est prévu, au moyen duquel l'amplitude du taux de variation de l'angle de la pale (υ) peut être réduit et / ou par l'intermédiaire duquel la vitesse de variation des taux de variation de l'angle de la pale (G) peut être réduite ou limitée.

13. Dispositif de commande ou de régulation (42) d'une éolienne (11) **caractérisé en ce qu'**un procédé selon l'une quelconque des revendications 1 à 7 est effectué.

14. Programme d'ordinateur **caractérisé en ce qu'**il comprend des moyens adaptés pour exécuter le procédé selon l'une quelconque des revendications 1 à 7, en particulier lorsqu'un dispositif de commande ou de régulation (42) d'une éolienne (11) est en cours d'exécution.

15. Programme informatique selon la revendication 14 **caractérisé en ce qu'**il est stocké sur un support de données lisible par ordinateur.
